(19) **Europäisches Patentamt / European Patent Office / Office européen des brevets**

(11) **EP 4 521 140 A1**

(12) **EUROPEAN PATENT APPLICATION**
published in accordance with Art. 153(4) EPC

(43) Date of publication:
**12.03.2025 Bulletin 2025/11**

(21) Application number: **22939717.9**

(22) Date of filing: **29.08.2022**

(51) International Patent Classification (IPC):
***G01S 7/4861*** (2020.01)

(52) Cooperative Patent Classification (CPC):
**G01S 7/02; G01S 7/484; G01S 7/4861**

(86) International application number:
**PCT/CN2022/115643**

(87) International publication number:
**WO 2023/206891 (02.11.2023 Gazette 2023/44)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **30.04.2022 CN 202210469553**

(71) Applicant: **Hesai Technology Co., Ltd.
Shanghai, 201815 (CN)**

(72) Inventors:
• **SHEN, Guofeng**
  **Shanghai, 201815 (CN)**
• **XIANG, Shaoqing**
  **Shanghai, 201815 (CN)**

(74) Representative: **Fish & Richardson P.C.
Highlight Business Towers
Mies-van-der-Rohe-Straße 8
80807 München (DE)**

(54) **SIGNAL TRANSMITTING/RECEIVING SYSTEM AND METHOD**

(57) A signal transmitting and receiving system and a method thereof are provided in this disclosure. The system includes: a transmitter circuit configured to generate a trigger signal at a trigger moment based on a first clock signal and transmit a detection signal at a transmitting time point; and a receiver circuit configured to receive an echo signal generated by reflection of the detection signal by a target object, and receive the trigger signal based on a second clock signal and enable a first receiving channel at an initial start time point, where the first receiving channel takes the initial start time point as a time origin and senses a return time point of receiving the echo signal: determining a first calculation start point of the first receiving channel, and determining a target time difference between the return time point sensed by the first receiving channel and the transmitting time point based on the first calculation start point, where a first delay of the initial start time point relative to the trigger time point includes an unpredictable jitter delay. Based on the signal transmitting and receiving system and the method thereof of this disclosure, a problem of a jitter of a scanning start point when a receiving system and a transmitting system are clocked asynchronously can be solved, and it is possible to accumulate scanning data in multiple scans in a chip, thereby further increasing a signal-to-noise ratio and improving a ranging capability and application scenarios of a receiving chip.

Fig. 3

## Description

## TECHNICAL FIELD

This disclosure relates to a signal transmitting and receiving system and a method thereof and, in particular, to a system and a method for stabilization of a scanning start point in a receiving system and a transmitting system with asynchronous clocks.

## BACKGROUND

A signal transmitting and receiving system is a common means of detecting a target object. By transmitting a signal to the target object and detecting a reflected echo signal, detection and measurement of the target object is realized. A typical application example includes a LiDAR detects the target object by emitting a laser beam, and calculates accurate distance, orientation, reflectivity and other information of at least one of the target object or area based on an echo signal reflected by a detected target object. Compared with other technologies, the LiDAR can better characterize a complex earth surface state, and the LiDAR is increasingly widely used in ranging applications such as distance measurement in fields of automobile driving and industrial automation, and has great market development prospects. In the existing technologies, an emitter of the LiDAR typically transmits an explosive energy signal emitted by a laser pulse, and after the explosive energy signal reflected by a reflective surface, part of the energy is absorbed to generate an attenuated and delayed LiDAR signal, which is superimposed on an original signal to form an echo. By accurately measuring time from pulse emission to echo reception, distance and position of a target relative to the LiDAR can be accurately measured.

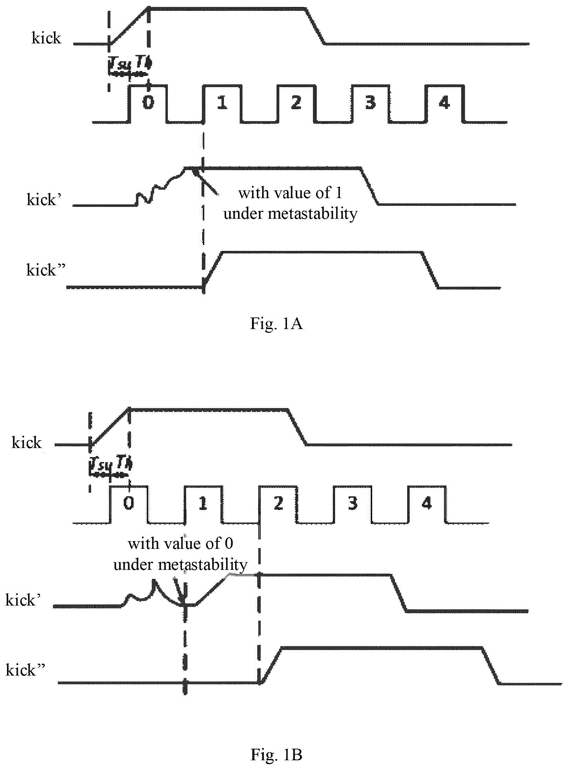

Generally speaking, emission and reception of laser are controlled by a same chip, but to improve a processing capability of the echo signal, an echo processing chip separate from a transmitting and receiving chip is provided, forming an asynchronous clock system. The echo processing chip need to detect a reference signal ("kick") sent by the transmitting and receiving chip to start scanning. An asynchronous clock cannot guarantee a phase relationship between a kick signal and a receiving clock ("clk") to meet needs of setup time ("Tsu") and hold time ("Th"). Accordingly, there is a certain probability of occurrence of metastability in detecting the kick signal. Figs. 1A and 1B respectively show two cases in which the metastability occurs for the kick signal. Generally, in a digital design, several flip-flops are made to the kick signal to eliminate the metastability. In the above figures, kick' represents a signal with the metastability, and kick" represents a signal after one flip-flop is made to eliminate the metastability. Although the metastability is eliminated, a rising edge of kick" when a value of the metastability is 0 is one clock cycle later than that when the value of the metastability is 1. This causes the kick signal synchronized to a receiving clock domain to jitter back and forth (with jitter time of an integer multiple of a receiving clock cycle). If this jitter is not suppressed, it may further cause a scanning start point to jitter back and forth when it is received. A jitter of 1 ns may cause a position jitter of a detected object of 15 cm, which is unacceptable for a LiDAR with accuracy of 2 to 3 cm. Accordingly, it is beneficial to solve a problem of an unstable scanning start point for an asynchronous clock receiving system for signal transmission and reception to ensure accuracy of object detection.

## SUMMARY

In an aspect, this disclosure discloses a signal transmitting and receiving system, including: a transmitter circuit configured to generate a trigger signal at a trigger time point based on a first clock signal and transmit a detection signal at a transmitting time point; and a receiver circuit configured to receive an echo signal generated by reflection of the detection signal by a target object, and receive the trigger signal based on a second clock signal and enable a first receiving channel at an initial start time point, where the first receiving channel takes the initial start time point as a time origin and senses a return time point of receiving the echo signal: determining a first calculation start point of the first receiving channel, and determining a target time difference between the return time point sensed by the first receiving channel and the transmitting time point based on the first calculation start point, where a first delay between the initial start time point and the trigger time point includes an unpredictable jitter delay.

Based on some embodiments of this disclosure, determining the target time difference includes: determining a first time difference between the first calculation start point and the return time point; and determining the target time difference by summing the first time difference with a pre-calibrated time calibration value.

Based on some embodiments of this disclosure, the transmitter circuit further generates a reference signal, and the reference signal has a fixed time sequence relationship with the transmitting time point; and the determining the first calculation start point further includes: determining, by the first receiving channel, a reference time point based on the reference signal, and determining the first calculation start point based on the reference time point.

Based on some embodiments of this disclosure, the determining the first calculation start point based on the reference time point includes determining an expected scanning delay, where the expected scanning delay is a delay of a preset duration after the reference time point; and the first receiving channel taking the initial start time point as the time origin: determining an initial timing time point; determining a compensation delay based on the initial timing time point and the reference time point, where the compensation delay includes a canceling part for the jitter delay; and determining the first calculation start point based on the initial timing time point and the compensation delay.

Based on some embodiments of this disclosure, the determining the initial timing time point includes: determining the initial timing time point based on the initial start time point.

Based on some embodiments of this disclosure, the receiver circuit further includes a second receiving channel, and the second receiving channel is enabled at a first start time point and configured to sense the echo signal; and the determining the initial timing time point includes: determining the initial timing time point based on the first start time point. Based on some embodiments of this disclosure, the determining the first calculation start point based on the initial timing time point and the compensation delay includes determining a system comprehensive delay, and determining a second delay based on the compensation delay, the expected scanning delay, and the system comprehensive delay; and determining the first calculation start point based on the initial timing time point and the second delay.

Based on some embodiments of this disclosure, the receiver circuit further determines a second calculation start point of the second receiving channel based on the second delay, and determines the target time difference between a return time point of the echo signal sensed by the second receiving channel and the transmitting time point based on the second calculation start point.

Based on some embodiments of this disclosure, the receiver circuit further includes a second receiving channel, and the second receiving channel enables a pre-enable signal at the first start time point and enables an enable signal at the second start time point, where the enable signal of the second receiving channel is configured to sense the echo signal; and the determining the initial timing time point includes: determining the initial timing time point based on the first start time point.

Based on some embodiments of this disclosure, the determining the first calculation start point based on the initial timing time point and the compensation delay includes determining the system comprehensive delay, determining the second delay based on the compensation delay, the expected scanning delay, and the system comprehensive delay, and determining the first calculation start point based on the initial timing time point and the second delay.

Based on some embodiments of this disclosure, the receiver circuit further determines the second calculation start point of the enable signal of the second receiving channel based on the first start time point and the second delay, and determines the target time difference between the return time point of the echo signal sensed by the enable signal and the transmitting time point based on the second calculation start point.

Based on some embodiments of this disclosure, determining the system comprehensive delay includes:

selecting a value of the system comprehensive delay of a previous scan as a value of the system comprehensive delay of a current scan; and the determining the first calculation start point includes: determining an initial second delay by summing the compensation delay, the expected scanning delay, and the system comprehensive delay of the current scan; determining an integer time unit value by rounding a value of the initial second delay; determining the integer time unit value as a value of the second delay of the current scan; updating the system comprehensive delay of the current scan based on the value of the second delay of the current scan; and determining the first calculation start point by summing the initial timing time point and the second delay at a current time point.

Based on some embodiments of this disclosure, the trigger signal is the reference signal; and the trigger time point is a rising edge time point of the reference signal, and the reference time point is a falling edge time point of the reference signal.

Based on some embodiments of this disclosure, the trigger signal is different from the reference signal, and has the fixed time sequence relationship with the reference signal; and the trigger time point is earlier than the rising edge time point of the reference signal, and the reference time point is the rising edge time point or the falling edge time point of the reference signal.

In another aspect, this disclosure discloses a signal transmitting and receiving method, including: generating a trigger signal at a trigger time point based on a first clock signal by a transmitter circuit and transmitting a detection signal at a transmitting time point; and receiving an echo signal generated by reflection of the detection signal by a target object by a receiver circuit, and receiving the trigger signal based on a second clock signal and enabling a first receiving channel at an initial start time point, where the first receiving channel takes the initial start time point as a time origin and senses a return time point of receiving the echo signal: determining a first calculation start point of the first receiving channel, and determining a target time difference between the return time point sensed by the first receiving channel and the transmitting time point based on the first calculation start point, where a first delay between the initial start time point and the trigger time point includes an unpredictable jitter delay.

Based on some embodiments of this disclosure, determining the target time difference between the return time point sensed by the first receiving channel and the transmitting time point based on the first calculation start point includes: determining a first time difference between the first calculation start point and the return time point; and determining the target time difference by summing the first time difference with a pre-calibrated time calibration value.

Based on some embodiments of this disclosure, the transmitter circuit further generates a reference signal, and the reference signal has a fixed time sequence relationship with the transmitting time point; and determining the first calculation start point further includes: determining, by the first receiving channel, a reference time point based on the reference signal, and determining the first calculation start point based on the reference time point.

Based on some embodiments of this disclosure, determining the first calculation start point based on the reference time point includes determining an expected scanning delay, where the expected scanning delay is a delay of a preset duration after the reference time point; and the first receiving channel taking the initial start time point as the time origin: determining an initial timing time point; determining a compensation delay based on the initial timing time point and the reference time point, where the compensation delay includes a canceling part for the jitter delay; and determining the first calculation start point based on the initial timing time point and the compensation delay.

Based on some embodiments of this disclosure, determining the initial timing time point includes: determining the initial timing time point based on the initial start time point.

Based on some embodiments of this disclosure, the receiver circuit further includes a second receiving channel, and the second receiving channel is enabled at a first start time point and configured to sense the echo signal; and determining the initial timing time point includes: determining the initial timing time point based on the first start time point.

Based on some embodiments of this disclosure, determining the first calculation start point based on the initial timing time point and the compensation delay includes determining a system comprehensive delay, determining a second delay based on the compensation delay, the expected scanning delay, and the system comprehensive delay; and determining the first calculation start point based on the initial timing time point and the second delay.

Based on some embodiments of this disclosure, the receiver circuit further determines a second calculation start point of the second receiving channel based on the first start time point and the second delay, and determines the target time difference between a return time point of the echo signal sensed by the second receiving channel and the transmitting time point based on the second calculation start point.

Based on some embodiments of this disclosure, the receiver circuit further includes a second receiving channel, and the second receiving channel enables a pre-enable signal at the first start time point and enables an enable signal at the second start time point, where the enable signal of the second receiving channel is configured to sense the echo signal; and determining the initial timing time point includes: determining the initial timing time point based on the first start time point.

Based on some embodiments of this disclosure, determining the first calculation start point based on the initial timing time point and the compensation delay includes determining the system comprehensive delay, determining the second delay based on the compensation delay, the expected scanning delay, and the system comprehensive delay, and determining the first calculation start point based on the initial timing time point and the second delay.

Based on some embodiments of this disclosure, the receiver circuit further determines the second calculation start point of the enable signal of the second receiving channel based on the first start time point and the second delay, and determines the target time difference between the return time point of the echo signal sensed by the enable signal and the transmitting time point based on the second calculation start point.

Based on some embodiments of this disclosure, determining the system comprehensive delay includes: selecting a value of the system comprehensive delay of a previous scan as a value of the system comprehensive delay of a current scan; and determining the first calculation start point includes: determining an initial second delay by summing the compensation delay, the expected scanning delay, and the system comprehensive delay of the current scan; determining an integer time unit value by rounding a value of the initial second delay; determining the integer time unit value as a value of the second delay of the current scan; updating the system comprehensive delay of the current scan based on the value of the second delay of the current scan; and determining the first calculation start point by summing the initial timing time point and the second delay at a current time point.

Based on some embodiments of this disclosure, the trigger signal is the reference signal; and the trigger time point is a rising edge time point of the reference signal, and the reference time point is a falling edge time point of the reference signal.

Based on some embodiments of this disclosure, the trigger signal is different from the reference signal, and has the fixed time sequence relationship with the reference signal; and the trigger time point is earlier than the rising edge time point of the reference signal, and the reference time point is the rising edge time point or the falling edge time point of the reference signal.

Based on the signal transmitting and receiving system and the method thereof provided in this disclosure, a determined calculation start point of the receiving system is not influenced by cross clock domain metastability of the receiving system and the transmitting system, and a stability mechanism principle and a calculation method of a calculation start point of this disclosure are simple and easy to realize, thereby improving accuracy of time measurement and precision of a ranging system. And it is possible to accumulate scanning data in multiple scans in a chip, thereby further increasing a signal-to-noise ratio and improving a ranging capability and application scenarios of a receiving chip. In addition, the system and the method in this disclosure reasonably use existing hardware resources of the chip and it is not beneficial to determine additional devices to stabilize a scanning start point of the receiving system.

## BRIEF DESCRIPTION OF THE DRAWINGS

To describe technical solutions of embodiments of this specification more clearly, drawings to be used in the description of the embodiments can be briefly introduced below, and it is clear that the drawings described below are merely some embodiments of this specification, and that at least one of other drawings or other embodiments can also be determined based on these drawings for those ordinary skilled in the art without creative labor.

Figs. 1A and 1B list two cases in which metastability occurs for a kick signal, respectively;
Fig. 2 shows a schematic structural diagram of a signal transmitting and receiving system, provided in some embodiments of this specification;
Fig. 3 shows a workflow 300 of a signal transmitting and receiving system, provided in some embodiments of this specification;
Fig. 4 shows a signal diagram corresponding to an embodiment of a method 300;
Figs. 5A-C show signal diagrams corresponding to another embodiment of a method 300;
Figs. 6A-C show signal diagrams corresponding to still another embodiment of a method 300;
Fig. 7 shows a specific example corresponding to a signal diagram shown in Fig. 5A; and,
Fig. 8 shows a specific example corresponding to a signal diagram shown in Fig. 6A;
Fig. 9 shows a measurement example of a receiver circuit in an asynchronous clock domain in the existing technologies.

Description of reference numbers:

Signal transmitting and receiving system: 100; transmitter circuit: 110; first clock signal: 111; receiver circuit: 120; second clock signal: 121; receiving channel: 122; histogram sampler: HDC; time-to-digital converter: TDC; transmitting time point: $t_0$; initial start time point:

$$\widetilde{t_0}$$

; first calculation start point: t_TDC_origin; second calculation start point: t_HDC_origin; return time point: $t_4$; target time difference: TOF; reference time point: $t_2$; initial time point: $t_1$; expected scanning delay: $T_1$; system comprehensive delay: $\delta t$; second delay: x; compensation delay: $\Delta t$; TDC time calibration value: t_TDC_c; HDC time calibration value: t_HDC_c; reference signal: kick; and trigger time point: t_trigger.

## DETAILED DESCRIPTION

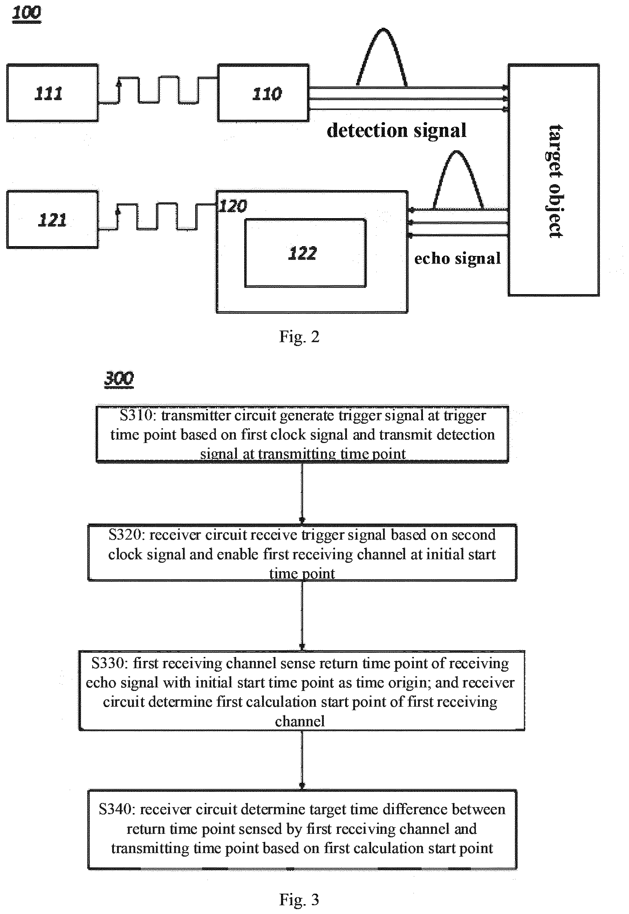

With reference to Fig. 2, Fig. 2 shows a schematic structural diagram of a signal transmitting and receiving system 100, provided in some embodiments of this specification. For example, when the system 100 is a LiDAR system, the signal can be a laser signal. When the system 100 is an electromagnetic wave radar system, the signal can be an electromagnetic wave. When the system 100 is an ultrasonic radar system, the signal can be an ultrasonic signal. The system 100 can also be a quantum detection system, and a signal can be a detection signal related to a quantum detection principle. Of course, the system 100 can also be the signal transmitting and receiving system in other forms, which is not limited in this disclosure. In this disclosure, technical solutions of this disclosure can be illustrated by taking the LiDAR as an example. However, the technical solutions can be applied to the above other examples based on the technical solutions of this disclosure by those skilled in the art without departing from the spirit and essence of this disclosure.

The signal transmitting and receiving system 100 includes a transmitter circuit 110 and a receiver circuit 120. The transmitter circuit 110 and the receiver circuit 120 are two independently operated circuits, which operate based on different clock signals. For example, the transmitter circuit 110 can be a transmitter circuit or a transmitting chip of the LiDAR. Under a normal working condition, the laser transmitter circuit or the transmitting chip can output a laser pulse at a certain frequency. The receiver circuit 120 can be a receiver circuit or a receiving chip of the LiDAR. Under the normal working condition, the receiver circuit or the receiving chip can receive an echo signal reflected by a target object, and calculate a time of flight ("TOF") or a target time difference of each laser pulse based on a transmitting time point of transmitting the laser pulse and a return time point of receiving the echo signal.

The transmitter circuit 110 includes a first clock signal 111. In some embodiments, the transmitter circuit 110 transmits the detection signal at a transmitting time point $t_0$ based on the first clock signal 111. Because the transmitter circuit 110 and the receiver circuit 120 operate based on different clock signals, the transmitter circuit 110 also transmits a trigger signal to the receiver circuit 120 to enable the receiver circuit 120 to start scanning of the echo signal. Accordingly, the transmitter circuit 110 can generate the trigger signal at a time point t_trigger based on the first clock signal 111 and transmit the trigger signal to the receiver circuit 120 to enable a receiving channel 122, to cause the receiver circuit 120 to be ready to receive the echo signal. The echo signal is a signal generated by reflection of the detection signal by the target object. For example, in an example of the LiDAR, the echo signal is the laser reflected back after the emitted laser incident on the objects surrounding the LiDAR and is captured by the LiDAR. The trigger signal can be a kick signal as a reference signal or other trigger signals different from the reference signal. Among them, there is a fixed time sequence relationship between generation and transmitting time point t_trigger of the trigger signal and the transmitting time point $t_0$ of the detection signal, for example, $t_0$ is at a certain time point after the time point t_trigger, or $t_0$ and t_trigger can also be a same time point. This is described in detail later in this specification.

The receiver circuit 120 includes a second clock signal 121 and the receiving channel 122. The receiver circuit 120 can detect the trigger signal transmitted by the transmitter circuit based on the second clock signal 121. By receiving the trigger signal, the receiver circuit 120 can enable the receiving channel 122 to start timing and detect the echo signal. For example, the receiving channel 122 can include one receiving channel or multiple receiving channels, such as a time-to-digital converter ("TDC"), or a time-to-digital converter ("TDC") and a histogram sampler ("HDC"), and TDC and HDC are both original receiving channels in a LiDAR transmitter circuit/chip. TDC and HDC each have their own measurement advantages. TDC is more suitable for measurement of nearby large signals and HDC is more suitable for measurement of distant small signals. The echo signal can be detected by using both TDC and HDC, and then fusion processing of point cloud data can be performed, more accurate echo signal data can be determined.

Fig. 3 shows a workflow 300 of a signal transmitting and receiving system 100, provided in some embodiments of this disclosure, and the workflow 300 includes the following steps.

At S310, the transmitter circuit generates the trigger signal at the trigger time point based on the first clock signal, and transmits the detection signal at the transmitting time point.

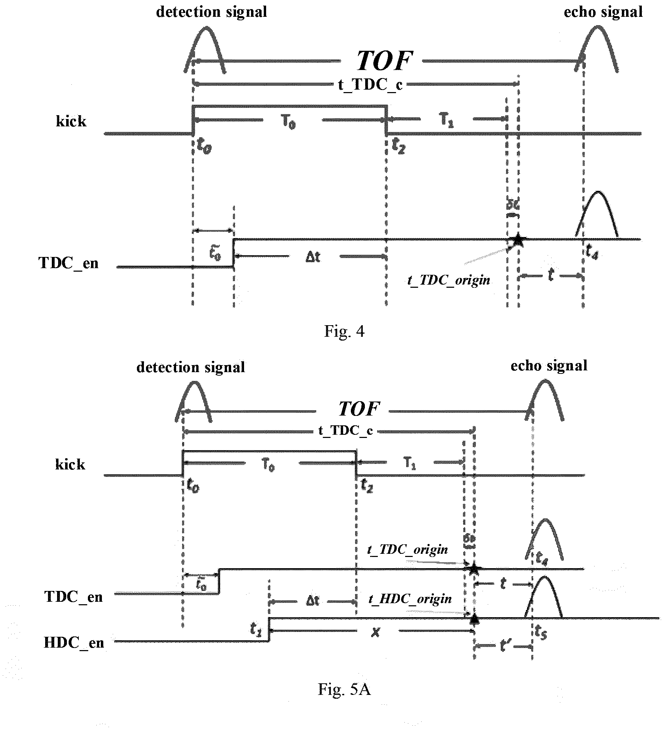

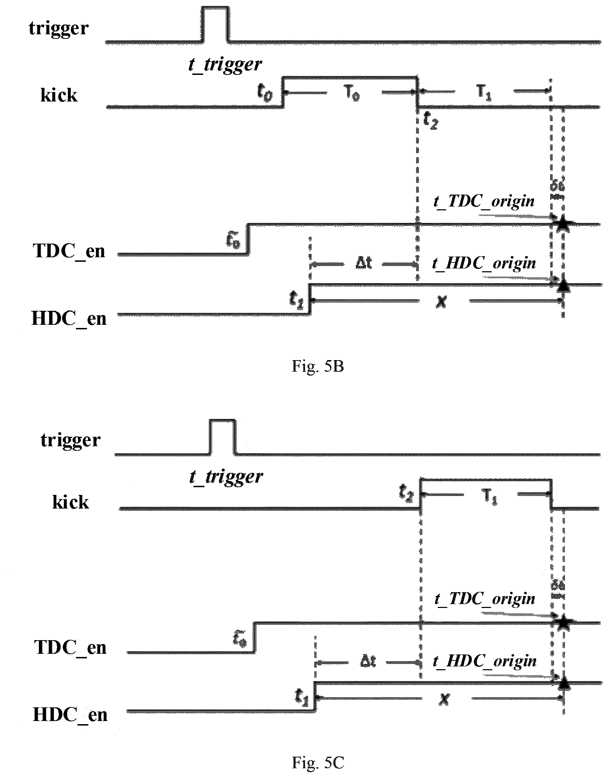

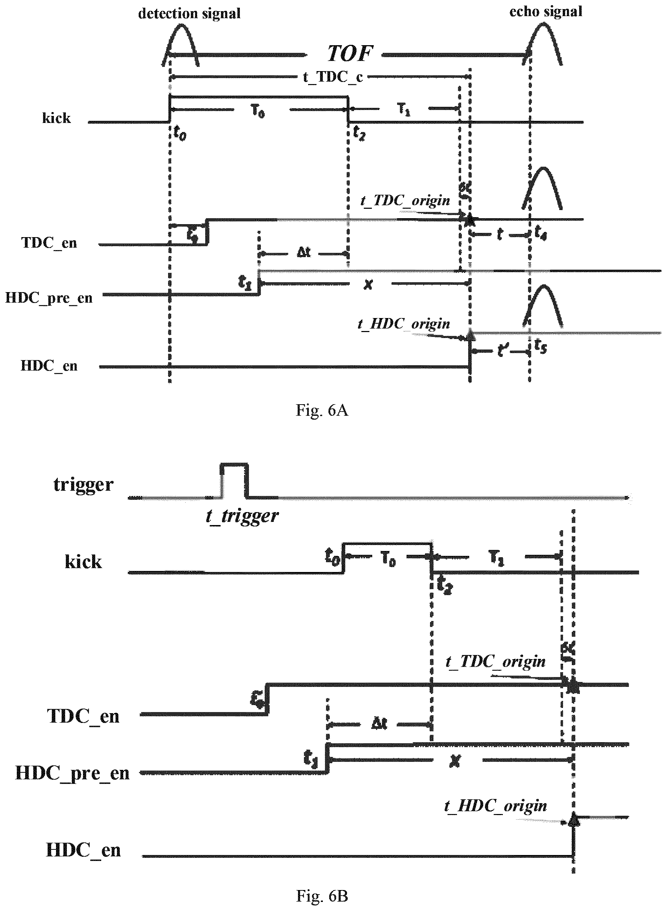

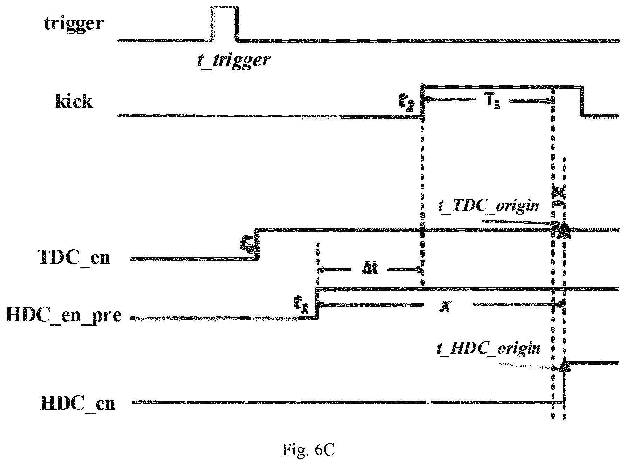

As described, the transmitter circuit 110 can generate the trigger signal at the trigger time point t_trigger based on the first clock signal 111, and transmit the trigger signal to the receiver circuit 120 to enable the receiving channel 122. As shown in Fig. 4, Fig. 5A, and Fig. 6A, the trigger signal can be a reference signal kick. A generation and transmitting time point t_trigger of a rising edge of the reference signal kick and a the transmitting time point $t_0$ of the detection signal can be a same time point or different time points, for example, the transmitting time point $t_0$ can be a certain time point after the rising edge of the reference signal kick. As shown in Fig. 5B, Fig. 5C, Fig. 6B, and Fig. 6C, the trigger signal trigger can also be other trigger signals different from the reference signal kick, and the generation and the transmitting time point t_trigger of the trigger signal trigger can be earlier than a rising edge time point of the reference signal kick, and there is a fixed time sequence relationship between t_trigger and the rising edge time point of the reference signal kick.

At S320, the receiver circuit receives the trigger signal based on the second clock signal, and enables the first receiving channel at an initial start time point.

As described, the receiver circuit 120 can determine an enable time point, that is, the initial start time

point $\widetilde{t}_0$, of the receiving channel 122 based on the second clock signal 121, and the receiving channel 122 performs detection of the echo signal by taking the initial start time point $\widetilde{t}_0$ as its time origin. As described, the trigger signal can be the reference signal kick or other trigger signals different from the reference signal kick, and thus, the receiver circuit 120 can enable the receiving channel based on the reference signal kick, or can enable the receiving channel based on other trigger signals. In some embodiments, the receiving channel 122 can merely include the first receiving channel, such as a time-to-digital converter TDC in Fig. 4. The receiving channel 122 can also include both the first receiving channel, such as the time-to-digital converter TDC in Figs. 5A-C, and the second receiving channel, such as a histogram sampler HDC in Figs. 5A-C. The first receiving channel and the second receiving channel can both sense the echo signal independently. The receiving channel can also be other types of measurement channels except TDC and HDC, and the receiver circuit can also include more than two receiving channels, which can be fully applied to other examples based on the technical solutions of this disclosure by those skilled in the art based on essence and spirit of this disclosure. A TDC enable signal is represented as TDC_en in Fig. 4, Fig. 5A-C, and Figs.6A-C. In some embodiments, with reference to Figs. 5A-C, the receiver circuit 120 can enable the second receiving channel HDC after the initial start time

point $\widetilde{t}_0$, and enable HDC at an initial timing time point $t_1$. In some embodiments, the TDC can sense the initial timing time point $t_1$, a reference time point $t_2$, and a return time point $t_4$ of receiving the echo signal. In some embodiments, with reference to Figs. 6A-C, the receiver circuit 120 can control the second receiving channel to generate a HDC pre-enable signal (HDC_en_pre) after the initial

start time point $\widetilde{t}_0$, for example, enable HDC_en_pre at a first start time point $t_1$, and the receiver circuit 120 controls the second receiving channel HDC to enable a HDC enable signal (HDC_en) at a second calculation start point t_HDC_origin, and HDC_en can sense the echo signal.

As described above, because the receiving chip has a certain probability of occurrence of metastability when synchronizing the trigger signal (e.g., the reference signal kick), there is an unpredictable jitter delay between the initial start time point $\widetilde{t}_0$ and the trigger time point t_trigger of the trigger signal trigger. Because the receiving channel detects the echo signal with the initial start

time point $\widetilde{t}_0$ as its time origin, the unpredictable jitter delay can result in instability of a time origin for measuring the echo signal, thereby making a measurement result of the echo signal unstable.

At S330, the first receiving channel senses the return time point of receiving the echo signal with the initial start time point as the time origin, and the receiver circuit determines a first calculation start point of the first receiving channel.

Because the first receiving channel is activated at the initial start time point $\widetilde{t_0}$, all subsequent time and time calculations are measured and calculated with the initial start time point $\widetilde{t_0}$ as the time origin for the first receiving channel.

To determine the first calculation start point t_TDC_origin of the first receiving channel TDC, the first receiving channel can firstly determine the reference time point $t_2$ based on the reference signal kick, and then determine the first calculation start point t_TDC_origin based on the reference time point. Specifically, the receiver circuit can determine an expected scanning delay $T_1$ and a system comprehensive delay $\delta t$, and the first receiving channel can determine the initial timing time point $t_1$ and the reference time point $t_2$ with the initial start time point $\widetilde{t_0}$ as the time origin.

There are various methods to determine the initial timing time point $t_1$. In some embodiments, as shown in Fig. 4, when the receiver circuit 120 merely includes the first receiving channel, the initial timing time point $t_1$ can be determined based on the initial start time point $\widetilde{t_0}$. In some embodiments, the initial timing time point $t_1$ is the initial start time point $\widetilde{t_0}$. In some embodiments, as shown in Figs. 5A-C, the receiver circuit 120 includes both the first receiving channel and the second receiving channel, and the second receiving channel is enabled at the first start time point, and the first receiving channel determines the initial timing time point $t_1$ based on the first start time point. In some embodiments, the first start time point is the initial timing time point $t_1$. In some embodiments, as shown in Figs. 6A-C, the receiver circuit 120 includes both the first receiving channel and the second receiving channel, and the second receiving channel enables the pre-enable signal HDC_en_pre at the first start time point and enables the enable signal HDC_en at the second start time point. The first receiving channel determines the initial timing time point based on the first start time point. In some embodiments, the first start time point is the initial timing time point $t_1$.

In some embodiments, the expected scanning delay $T_1$ is a delay of a preset duration after the reference time point $t_2$. The expected scanning delay $T_1$ can be determined by a system, and specific value of the expected scanning delay $T_1$ can be determined by testing. In some embodiments, the expected scanning delay $T_1$ can be determined to a value greater than or equal to zero, for example, in a case of merely the first receiving channel (Fig. 4) or in a case of the second receiving channel merely enabling the enable signal HDC_en (Figs. 5A-C). In some other embodiments, the expected scanning delay $T_1$ can be determined to a value greater than zero.

In some embodiments, the reference time point $t_2$ can be a falling edge time point of the reference signal kick. In other embodiments, the reference time point $t_2$ can be the rising edge time point of the reference signal kick. For example, the first receiving channel can sense a falling edge time point of the reference signal kick as the reference time point $t_2$ (Figs. 4, 5A, 5B, 6A, and 6B), and can also sense the rising edge time point of the reference signal kick as the reference time point (Figs. 5C and 6C). Because the first receiving channel performs time measurement by taking the initial start time point $\widetilde{t_0}$ as the time origin, the reference time point $t_2$ includes a negative jitter error relative to the initial start time point $\widetilde{t_0}$, thereby canceling an influence of a jitter delay of the initial start time point $\widetilde{t_0}$.

After the reference time point $t_2$ is determined, the receiver circuit can determine a compensation delay $\Delta t$ based on the initial timing time point $t_1$ and the reference time point $t_2$. In some embodiments, the compensation delay $\Delta t$ is a time difference between the reference time point $t_2$ and the initial timing time point $t_1$. Because time difference between the initial timing time point $t_1$ and the initial start time point $\widetilde{t_0}$ is generally fixed, the compensation delay $\Delta t$ includes a canceling part for the jitter delay.

The receiver circuit 120 is formed of multiple electrical elements, and each electrical element can have its own errors due to manufacturing, calibration, thermal drift, and other reasons when processing a signal response. These errors can accumulate and result in a system comprehensive delay $\delta t$ of the receiver circuit 120 in response. Accordingly, in addition to determining the reference time point $t_2$ and the compensation delay $\Delta t$, the receiver circuit 120 also determines the system comprehensive delay $\delta t$ by means of iteration. The method is specifically as follows.

Firstly, a value of an initial comprehensive delay is determined, and a preset expected scanning delay $T_1$ is retrieved. Then, at the beginning of each iteration, a value of the system comprehensive delay of a previous scan is selected as a value of the system comprehensive delay value of a current scan. When the current scan is an initial scan, the value of the system comprehensive delay of the current scan is the value of the initial comprehensive delay, and in some embodiments, the value of the initial comprehensive delay is zero. The compensation delay $\Delta t$, the expected scanning delay $T_1$, and the system

comprehensive delay δt of the current scan are summed to determine an initial second delay x, a value of the initial second delay x is rounded to determine an integer time unit value, the integer time unit value is determined as the value of the second delay x, and the system comprehensive delay δt of the current scan is updated based on the value of the second delay x.

After the above parameters are determined, the receiver circuit 120 can determine the first calculation start point based on the initial timing time point and the second delay x. In some embodiments, the first calculation start point is a sum of the initial timing $t_1$ and the second delay x, that is, a time point determined by delaying of an enable time point of TDC_en of the first receiving channel by $t_1$+x is the first calculation start point t_TDC_origin of the first receiving channel. Because the first receiving channel detects the echo signal with its enable time point as the time origin, after the first calculation start point t_TDC_origin is determined, the return time point is recalculated with the first calculation start point t_TDC_origin, and a value of the first calculation start point t_TDC_origin (i.e., $t_1$+x) should be subtracted from the return time point measured by TDC. In some embodiments, the receiver circuit 120 further includes the second receiving channel, and thus step S330 further includes step S331.

At S331, the receiver circuit determines the second calculation start point of the second receiving channel based on the second delay.

In some embodiments, the receiver circuit 120 further includes the second receiving channel, and thus the receiver circuit determines the second calculation start point t_HDC_origin. In some embodiments, the second receiving channel merely has the enable signal HDC_en, and the second receiving channel measures the echo signal with the enable time point of the enable signal HDC_en as its time origin. The receiver circuit determines the second calculation start point based on the second delay. Specifically, a time point determined by delaying the enable time point of HDC_en of the second receiving channel by the second delay x is the second calculation start point t_HDC_origin of the second receiving channel. Because the second receiving channel detects the echo signal with its enable time point as the time origin, after the second calculation start point t_HDC_origin is determined, the return time point is recalculated with the second calculation start point t_HDC_origin, and a value of the second calculation start point t_HDC_origin (i.e., x) should be subtracted from the return time point measured by HDC. In some embodiments, the second receiving channel has the pre-enable signal HDC_en_pre and the enable signal HDC_en. The receiver circuit determines the second calculation start point based on the second delay. Specifically, the second receiving channel is enabled at the time determined by delaying the enable time point of HDC_en_pre by the second delay, which is the second calculation start point t_HDC_origin of the second receiving channel. In this case, the second calculation start point is the enable time point of HDC_en, and the second receiving channel measures the echo signal with the second calculation start point as the time origin.

In some embodiments, as shown in Fig. 5B, the trigger signal trigger and the reference signal kick can be two different signals. The transmitter circuit provides the trigger signal trigger before the reference signal kick. A delay between the trigger signal trigger and the reference signal kick is fixed, to cause a receiving channel of the receiver circuit 120 to be triggered before arrival of the reference signal kick, and the reference time point $t_2$ can be determined by measuring the falling edge of the reference signal kick. In some embodiments, as shown in Fig. 5C, the trigger signal trigger and the reference signal kick can be two different signals. The transmitter circuit 110 provides the trigger signal trigger before the reference signal kick, to cause the receiving channel to be triggered before the arrival of the reference signal kick. The receiver circuit can determine the reference time point $t_2$ by measuring the rising edge of the reference signal kick.

In some embodiments, as shown in Fig. 6B, the trigger signal trigger and the reference signal kick can be two different signals. The transmitter circuit provides the trigger signal trigger before the reference signal kick. The delay between the trigger signal trigger and the reference signal kick is fixed, to cause TDC and HDC of the receiver circuit 120 to be triggered before the arrival of the reference signal kick, and the reference time point $t_2$ can be determined by measuring the falling edge of the reference signal kick. In some embodiments, as shown in Fig. 6C, the trigger signal trigger and the reference signal kick can be two different signals. The transmitter circuit 110 provides the trigger signal trigger before the reference signal kick, to cause the receiving channel to be triggered before the arrival of the reference signal kick. The receiver circuit can determine the reference time point $t_2$ by measuring the rising edge of the reference signal kick.

At S340, the receiver circuit determines a target time difference between the return time point sensed by the first receiving channel and the transmitting time point based on the first calculation start point.

Taking the LiDAR as an example, the target time difference between the return time point $t_4$ and the transmitting time point $t_0$ is time from emission to reflection of the laser, that is, target time difference TOF (Figs. 4, 5A, and 6A.)

In this step, the receiver circuit firstly determines a time calibration value t_TDC_c of the first receiving channel in scanning for the first time, and the time calibration value t_TDC_c is time difference between the transmitting time point $t_0$ and the first calculation start point. The time difference between the first calculation start point and the return time point of the echo signal is not influenced by the jitter delay, and the time difference (i.e., t_TDC_c) between the transmitting time point $t_0$ of the LiDAR and the first calculation start point can be determined through system calibration, and the time calibration value t_TDC_c is fixed during multiple scans. Specifically, for example, before the system 100 is used, calibration detection can be performed on a calibration object with a known fixed distance to determine the time calibration value t_TDC_c. In this way, in subsequent calculation of the target time difference, the receiver circuit 120 can retrieve the pre-calibrated time calibration value t_TDC_c.

Next, the receiver circuit firstly determines a first time difference t between the first calculation start point and the return time point $t_4$, t = $t_4$ - t_TDC_origin, and then the first time difference t and the time calibration value t_TDC_c are summed to determine a sum of time, and the sum of time is the target time difference TOF measured by the first receiving channel. In this way, a measurement process of the first receiving channel is completed. Because the calculation start point t_TDC_origin is a stable time point with the jitter delay of the initial start time point $\widetilde{t_0}$ eliminated, measurement of the target time difference is stable and accurate. In some embodiments, the receiving channel further includes the second receiving channel, and thus step S330 further includes step S341.

At S341, the receiver circuit determines a target time difference between the return time point sensed by the second receiving channel and the transmitting time point based on the second calculation start point.

Taking the LiDAR as an example, the target time difference between the return time point $t_5$ and the transmitting time point $t_0$ is time from the emission to the reflection of the laser, that is, the target time difference TOF (Figs. 5A and 6A) .

In this step, the receiver circuit firstly determines a time calibration value t_HDC_c of the second receiving channel in scanning for the first time, and the time calibration value t_HDC_c is time difference between the transmitting time point $t_0$ and the second calculation start point. The time difference between the second calculation start point and the return time point of the echo signal is not influenced by the jitter delay, and the time difference (i.e., t_HDC_c) between the transmitting time point $t_0$ of the LiDAR and the second calculation start point can be determined through the system calibration, and the time calibration value t_HDC_c is fixed during the multiple scans. Specifically, for example, before the system 100 is used, the calibration detection can be performed on the calibration object with the known fixed distance to determine the time calibration value t_HDC_c. In this way, in the subsequent calculation of the target time difference, the receiver circuit 120 can retrieve the pre-calibrated time calibration value t_HDC_c.

Next, the receiver circuit firstly determines a second time difference t' between the second calculation start point and the return time point $t_5$, t' = $t_5$-t_HDC_origin, and then the second time difference t' and the time calibration value t_HDC_c are summed to determine a sum of time, and the sum of time is the target time difference TOF measured by the second receiving channel. In this way, a measurement process of the second receiving channel is completed. Because the second calculation start point t_HDC_origin is a stable time point with the jitter delay of the initial start time point $\widetilde{t_0}$ eliminated, the measurement of the target time difference is stable and accurate.

A principle that a scanning start point can be stabilized in embodiments of Figs. 5 and 6 is explained with specific examples.

To clearly clarify a stability mechanism of the scanning start point of the receiving channel of the receiver circuit in the technical solutions of this disclosure, firstly, an influence of a jitter of the scanning start point caused by the metastability on the measurement result of the echo signal when the receiver circuit and the transmitter circuit are in a cross clock state without using the technical solutions of this disclosure is introduced.

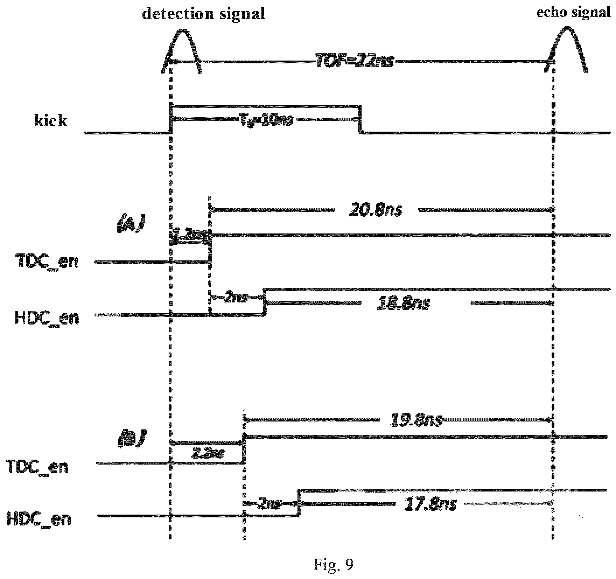

With reference to Fig. 9, (A) and (B) in Fig. 9 show two consecutive scans for an echo signal, respectively. Firstly, it is assumed that the target time difference TOF corresponding to distance between the target object and the signal transmitting and receiving system 100 is 22 ns. The target time difference TOF can be specifically determined by transmitting a laser beam to the target object at a known distance, or can be determined by other means, which is not limited in this disclosure. And it is assumed that the transmitter circuit transmits the detection signal at the rising edge time point of the kick signal, and the transmitting time point $t_0$ is considered as a zero time point of the first clock signal. After synchronizing with the reference signal transmitted by the transmitter circuit, the receiver circuit controls TDC and HDC to be enabled, respectively. It is assumed that TDC is enabled with a delay of 1.2 ns relative to $t_0$ and HDC is enabled with a delay of 3.2 ns relative to $t_0$ during a first scan (Fig. 9(A)), the return time point of the detection signal measured by TDC is 20.8 ns (this is because timing measurement starts after TDC delays a signal transmitting time point by 1.2 ns, for the echo signal with a real value of 22 ns, a TOF value measured by TDC is 22 - 1.2 = 20.8 ns), and correspondingly, a TOF value measured by HDC is 18.8 ns. In the first scan, TOF values determined by TDC and HDC can be calibrated using the target object at the known distance to ensure accuracy of a result. In this case, values measured by TDC and HDC are calibrated using a real TOF value of 22 ns. A time calibration value of TDC can be determined as t_TDC_c=1.2 ns and a time calibration value of HDC can be determined as t_HDC_c=3.2 ns. After calibrating the values measured by TDC and HDC with the calibration value, the determined TOF values measured by TDC and HDC are both 22 ns. In practical applications, testing and calibration are typically performed merely in the first scan of the LiDAR, or the calibration is performed at a certain interval, but not performed for each scan. After the calibration, the LiDAR performs the calibration on a measurement result with the time calibration value described above during a subsequent scanning process of the echo signal.

Due to existence of the metastability, there can be a deviation of nearly a single ns when the receiver circuit synchronizes the kick signal transmitted by the transmitter circuit during the multiple scans, and thus there can be the deviation of nearly the single ns when the receiver circuit determines the enable time point of TDC and the enable time point of HDC. That is, in this example, there can be the deviation of nearly the single ns for delay time of the respective enable time point of TDC and enable time point of HDC relative to the rising edge of the kick signal during the multiple scans. On this basis, it is assumed that during a second scan, the enable time point of TDC is delayed by 2.2 ns from the rising edge time point of the kick signal and the enable time point of HDC is delayed by 2.2 ns from the rising edge time point of the kick signal, and thus for the echo signal with 22 ns, the return time point measured by TDC is 19.8 ns and the return time point measured by HDC is 17.8 ns. By calibrating this scanning result using the previously determined time calibration value, it can be determined that TOF measured by TDC can be TOF = $19.8 + t\_TDC\_c$ = $19.8 + 1.2 = 21$ ns and TOF measured by HDC can be TOF = $17.8 + t\_HDC\_c = 17.8 + 3.2 = 21$ ns, respectively. Compared with a measurement result in the first scan, it can be seen that the TOF value determined in the second scan has the deviation of 1 ns from an accurate TOF value, and this deviation of 1 ns is caused by the jitter of scanning start points of TDC and HDC caused by the metastability. The jitter of the scanning start points makes the measurement of the TOF value by the receiver circuit inaccurate during the multiple scans.

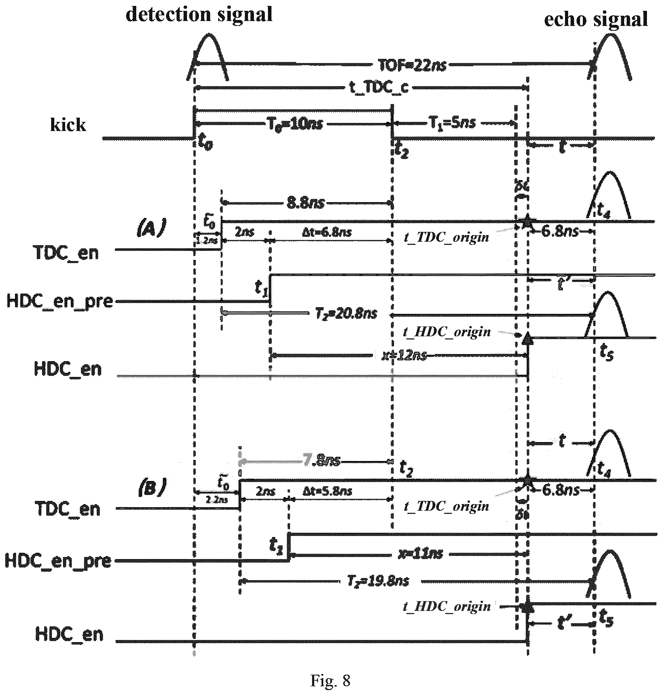

The technical solutions of this disclosure are explained with reference to Fig. 8, Fig. 8 is an exemple illustration corresponding to a signal diagram embodiment shown in Fig. 6A. The receiver circuit 120 has the first receiving channel and the second receiving channel, the first receiving channel is TDC, the second receiving channel is HDC, and the trigger signal is the reference signal kick. After synchronizing with the reference signal kick transmitted by the transmitter circuit, the receiver circuit enables the first receiving channel TDC_en at a time point $\widetilde{t_0}$, and enables the pre-enable signal HDC_en_pre of the second receiving channel is enabled at a time point of $t_1$. Based on the technical solutions of this disclosure, it is determined that the enable signal HDC_en of the second receiving channel is enabled at a time point t_HDC_origin. TDC_en senses the enable time point of HDC_en_pre as the initial timing time point $t_1$ and senses the falling edge time point of the kick signal as the reference time point $t_2$, and senses the return time point $t_4$ of the echo signal. HDC_en senses the return time point $t_5$ of the echo signal. In the exemple illustration shown in Fig. 8, it is assumed that the target time difference TOF corresponding to the distance of the target object from the signal transmitting and receiving system 100 is 22 ns, and the target time point TOF can be determined by transmitting the laser beam to the target object at the known distance, or it can be determined by other means, which is not limited in this disclosure. And it is assumed that the transmitter circuit transmits the detection signal at the rising edge time point of the kick signal, and the transmitting time point $t_0$ is considered as a zero time point of the first clock signal. The kick signal is a fixed pulse width signal with an assumed pulse width of 10ns. Firstly, the expected scanning delay $T_1$ is determined to 5 ns, and a delay time of the enable time point of HDC_en_pre relative to the enable time point of TDC_en is determined to a fixed value of 2 ns, the delay time can be specifically determined through a circuit. (A) and (B) in Fig. 8 show two consecutive scans for an echo signal, respectively.

It is assumed that in the first scan (with referenece to Fig. 8(A)), the enable time point of TDC_en is delayed by 1.2 ns relative to the transmitting time point $t_0$ in the transmitter circuit, that is, relative to the rising edge time point of the reference signal kick. The initial start time point $\widetilde{t_0}$ including the unpredictable jitter delay is 1.2 ns, where $\widetilde{t_0}$ of 1.2 ns is in terms of time of the first clock signal in the transmitter circuit. However, for the first receiving channel TDC, TDC_en can take its enable time point as its zero time point to sense other signals, that is, TDC_en takes the initial start time point as the time origin, and a measured return time point $t_4$ is 20.8 ns, because TDC_en starts timing to sense the echo signal with a delay of 1.2 ns relative to the transmitting time point, and for the echo signal of 22 ns, the return time measured by TDC_en is 22 - 1.2 = 20.8 ns. Based on the technical solutions of this disclosure, initialization is performed in the first scan as δt=0, the initial timing time point measured by TDC is $t_1$ = 2 ns, the reference time point is $t_2$ = 8.8 ns, and the compensation delay is determined as Δt = $t_2 - t_1 = 6.8$ ns. The second delay is calculated as x = round (Δt + $T_1$ + δt) = round (6.8 + 5 + 0) = 12 ns, where round (·) is a rounding function. The system comprehensive delay is updated as δt = x - Δt - $T_1$ = 12 - 6.8 - 5 = 0.2 ns. Based on the initial timing time point $t_1$ and the second delay x, the first calculation start point of TDC can be determined as t_TDC_origin = $t_1$ + x = 2 + 12 = 14 ns. Because the enable time point of TDC is delayed by 1.2 ns relative to the transmitting time point, the measured return time point t4 by TDC is 20.8 ns. The first time difference t is calculated, that is, a time difference between the calculation start point of TDC t_TDC_origin and the return time point $t_4$, t = $t_4$ - t_TDC_origin = 20.8 - 14 = 6.8 ns. The first time difference is a measurement value by TDC on the echo signal, which is recalculated based on the calculation start point of TDC determined based on the technical solutions of this disclosure. During a first scan, a testing and calibration can be performed on the measured value (i.e., the first time difference) determined by TDC using a target object at a known distance, and the time calibration value of TDC can be determined as t_TDC_c = 22 - 6.8 = 15.2 ns. During subsequent multiple scans, there is no need to perform the testing and calibrationagain. The time calibration value of the current scan is used as the time calibration value in subsequent scans to calculate the target time difference TOF. During the current scan, the target time difference measured by TDC can be determined as TOF = t + t_TDC_c = 6.8 + 15.2 = 22 ns based on the determined time calibration value and the first time difference measured by TDC.

For the histogram sampler HDC, its HDC_en senses the echo signal, and at the enable time point of HDC_en determined based on the technical solutions of this disclosure, that is, at a time point generated by delaying the enable time point of the HDC_en_pre signal by the second delay x, the receiver circuit controls HDC_en to be enabled. HDC_en starts to measure the echo signal with its enable time point as the time origin of HDC. The enable time point of HDC_en is delayed by 15.2 ns ($\widetilde{t_0} + t_1 + x = 15.2$ ns) relative to the rising edge of the reference signal kick, and thus an echo signal time point t' measured by HDC is 6.8 ns, and similarly, the time calibration value of HDC can be determined by the testing and calibration as t_HDC_c = t_TDC_c = 22 - 6.8 = 15.2 ns, and after the calibration, TOF measured by HDC is TOF = t' + t_HDC_c = 6.8 + 15.2 = 22 ns.

In the second scan (with reference to Fig. 8(B)), due to the existence of the metastability, the delay time between the enable time point of TDC _en and the rising edge of the reference signal kick is not fixed during multiple scan measurements, and there can be a deviation of nearly the single ns. Accordingly, it can be assumed herein that during a second scan, TDC is enabled after the delay of 2.2 ns from the rising edge of the reference signal kick in due to the metastability (with deviation of 1 ns from the delay of 1.2 ns in the first scan), that is, the initial start time point $\widetilde{t_0}$ including the unpredictable jitter delay is 2.2 ns. TDC_en takes the initial start time point $\widetilde{t_0}$ as the time origin, and a return time point $t_4$ of the echo signal, as measured, is 19.8 ns, the initial timing time point is $t_1 = 2$ ns, and the reference time point is $t_2 = 7.8$ ns. Based on the initial timing time point $t_1$ and the reference time point $t_2$, the compensation delay can be determined as $\Delta t = t_2 - t_1 = 5.8$ ns. Compared with $\Delta t = 6.8$ ns in the first scan, the compensation delay $\Delta t = 5.8$ ns in the second scan includes a jitter influence caused by the metastability, that is, includes the canceling part for the jitter delay. The system comprehensive delay updated in the previous scan is taken as the system comprehensive delay $\delta t = 0.2$ ns in the current scan. The second delay is calculated as x = round ($\Delta t + T_1 + \delta t$) = round (5.8 + 5 + 0.2) = 11 ns, the system comprehensive delay is updated as $\delta t = 11 - 5.8 - 5 = 0.2$ ns. The first calculation start point of TDC determined based on the technical solutions of this disclosure is t_TDC_origin = $t_1$ + x = 2 + 11 = 13 ns. Because the enable time point of TDC_en, that is, the initial timing time point $\widetilde{t_0}$, includes the unpredictable jitter delay, the TDC_en enable time point has changed compared to the enable time point during the previous measurement and is delayed by 2.2 ns relative to the rising edge time point of the reference signal kick, and the return time measured by TDC is $t_4$ = 19.8 ns. The return time point is sensed based on the calculation start point of TDC determined in this disclosure, the time difference between the first calculation start point t_TDC_origin of TDC and the return time point $t_4$, as the first time difference, is calculated as t = 19.8 - t_TDC_origin = 19.8 - 13 = 6.8 ns. By calibrating the first time difference measured by TDC using the previously determined time calibration value t_TDC_c, the target time difference can be determined as TOF = t_TDC_c + t = 15.2 + 6.8 = 22 ns. A value of the determined target time difference TOF is consistent with a value of the target time difference TOF in the previous scan, and is not influenced by the jitter of the enable time point of TDC, which illustrates that the calculation start point of TDC determined based on the technical solutions of this disclosure is stable.

The receiver circuit controls HDC_en to be enabled at a time point generated by delaying the enable time point of HDC_en_pre by x. The enable time point of HDC_en is used as the time origin of HDC measurement. Because the enable time point of HDC_en is delayed by 15.2 ns relative to the rising edge time point of the reference signal kick, the return time point t' measured by HDC is 6.8 ns. By calibrating the echo signal time point measured by HDC using the previously determined time calibration value t_HDC_c, the target time difference can be determined as TOF = t_HDC_c + t' = 15.2 + 6.8 = 22 ns. Itcan be known that a value of the target time difference TOF determined by HDC in the second scan is consistent with a value of the target time difference TOF determined in the first scan, and is not influenced by the metastability, which illustrates that the scanning start point of HDC (i.e., the enable time point of HDC) determined based on the technical solutions of this disclosure is stable. In addition, it can be intuitively seen based on Fig. 4 that the calculation start point of TDC and the calculation start point of HDC are aligned in time.

It can be seen that although the receiver circuit and the transmitter circuit are clocked asynchronously, there is the metastability when the receiver circuit synchronizes the trigger signal, resulting in the jitter of the enable time point of TDC of nearly a single ns, the calculation start point of TDC and the enable time point of HDC determined based on the technical solutions of this disclosure are stable during multiple measurements, and the target time difference determined using the stable calculation start point of TDC and the enable time point of HDC is also a stable value, and is not influenced by the jitter caused by the metastability. It can be seen that the technical solutions of this disclosure eliminate a problem of the jitter of the scanning start point in a case of an asynchronous clock of the receiver circuit, which can ensure stability of measurement results of the return time point in the multiple scans, thereby improving measurement accuracy. And the calculation start point of TDC and the enable time point of HDC determined by the technical solutions of this disclosure are aligned in time, to cause the measurement results of TDC and HDC on the echo signal to be consistent, which also facilitates subsequent fusion processing of the measurement results of TDC and HDC.

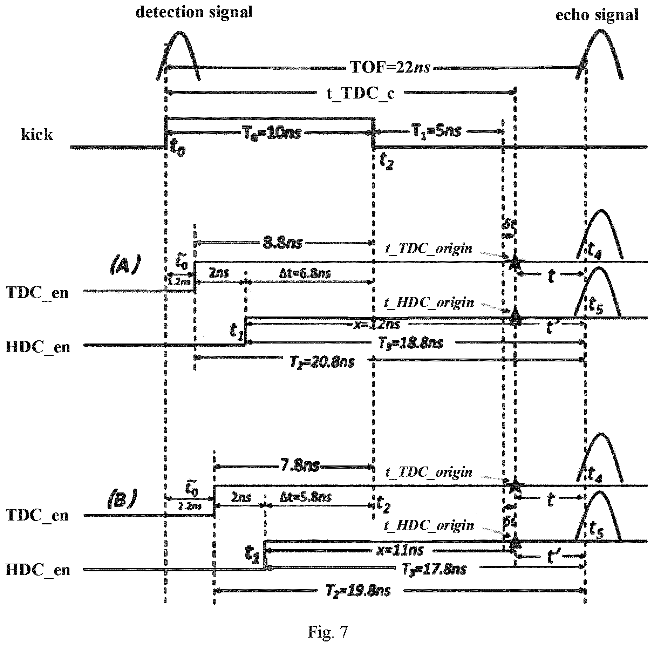

Fig. 7 is an example illustration corresponding to a signal diagram embodiment shown in Fig. 5A. The receiver circuit 120 includes the first receiving channel and the second receiving channel. The first receiving channel is specifically TDC, and the second receiving channel is specifically HDC. After synchronizing with the reference signal kick transmitted by the transmitter circuit, the receiver circuit enables the first receiving channel TDC_en at $\widetilde{t_0}$, and enables the second receiving channel HDC_en at $t_1$. TDC_en senses the enable time point of HDC_en as the initial timing time point $t_1$, and senses the falling edge time point of the kick signal as the reference time point $t_2$. TDC_en senses the return time point $t_4$ of the echo signal. HDC_en senses the return time point $t_5$ of the echo signal. It is assumed that the detection signal, the echo signal, and the reference signal are the same as those in Fig. 4, that is, assuming that the rising edge time point of the kick signal is the zero time point of the first clock, the detection signal is transmitted at the rising edge time point of the kick signal, an accurate TOF value between detection signal and echo signal is 22 ns, and the pulse width of the kick signal is 10 ns. The expected scanning delay $T_1$ is determined to be 5 ns. Firstly, the delay time of the enable time point of the enable signal HDC_en of the histogram sampler HDC relative to the enable time point of the enable signal TDC_en of the time-to-digital converter TDC is determined and fixed to be 2 ns, that is, $t_1 - \widetilde{t_0} = 2 \text{ ns}$. (A) and (B) in Fig. 7 show two consecutive scans for an echo signal, respectively.

It is assumed that in the first scan (with reference to Fig. 7(A)), the enable time point of TDC_en is delayed by 1.2 ns relative to the rising edge time point of the kick signal, that is, $t_0 - \widetilde{t_0} = 1.2 \text{ ns}$. Accordingly, the return time point $t_4$ measured by TDC with $\widetilde{t_0}$ as the time origin is 20.8 ns. Based on the technical solutions of this disclosure, the system comprehensive delay is initialized as $\delta t = 0$, the initial timing time point measured by TDC is $t_1 = 2$ ns, the reference time point measured by TDC is $t_2 = 8.8$ ns, and the compensation delay is $\Delta t = t_2 -$

$t_1 = 6.8$ ns. Accordingly, the second delay can be determined as $x = \text{round} (\Delta t + T_1 + \delta t) = \text{round} (6.8 + 5 + 0) = 12$ ns, where $\text{round} (\cdot)$ is the rounding function. On this basis, the system comprehensive delay is updated as $\delta t = 12 - 6.8 - 5 = 0.2$ ns. The calculation start point of TDC determined based on the solutions of this disclosure is $t\_TDC\_origin = t_1 + x = 2 + 12 = 14$ ns.

Because the enable time point of the time-to-digital converter TDC is delayed by 1.2 ns from the rising edge of the reference signal kick, the return time point $t_4$ measured by TDC is 20.8 ns. Recalculation is performed on the measurement result of the echo signal using the calculation start point $t\_TDC\_origin$ of TDC, and the time difference between the calculation start point $t\_TDC\_origin$ of TDC and the return time point $t_4$, that is, the first time difference, is calculated as $t = 20.8 - t\_TDC\_origin = 20.8 - 14 = 6.8$ ns. The first time difference is the measured value by TDC on the echo signal, where TDC is determined by recalculating based on the calculation start point of TDC determined based on the technical solutions of this disclosure. In the first scan, a testing and calibration are similarly performed on the measured value (i.e., the first time difference) determined by TDC using a target object at a known distance, and the time calibration value of TDC can be determined as $t\_TDC\_c = 22 - 6.8 = 15.2$ ns. In the subsequent scans, no futher testing and calibration is performed, the time calibration value of TDC in the current scan is used as the time calibration value of TDC in the subsequent multiple scans to calculate the target time difference, that is, the TOF value. During the current scan, the target time difference measured by TDC can be determined as $TOF = t + t\_TDC\_c = 6.8 + 15.2 = 22$ ns based on the determined time calibration value of TDC and the first time difference measured by TDC.

The enable time point $t_1$ of the histogram sampler HDC is delayed by 3.2 ns relative to the rising edge time point of the reference signal kick, HDC takes its enable time point as the time origin to measure the echo signal, and thus the return time point $t_5$ measured by HDC is 18.8 ns, and the calculation start point of HDC is $t\_HDC\_origin = x = 12$ ns. The time difference between the calculation start point $t\_HDC\_origin$ of HDC and the return time point $t_5$ is the second time difference $t' = t_5 - t\_HDC\_origin = 18.8 - 12 = 6.8$ ns, and the second time difference is the measured value by HDC on the echo signal, where HDC IS determined by recalculating based on the calculation start point of HDC determined based on the technical solutions of this disclosure. Similarly, the second time difference measured by HDC is calibrated in the first scan to determine the time calibration value of HDC as $t\_HDC\_c = 22 - 6.8 = 15.2$ ns. In the subsequent scans, no futher testing and calibration is performed, the time calibration value of HDC in the current scan is used as the time calibration value of HDC in the subsequent multiple scans to calculate the target time difference, that is, the TOF value. During the current scan, the target time difference measured by HDC can be determined as TOF = t' + t_HDC_c = 6.8 + 15.2 = 22 ns based on the determined time calibration value of HDC and the second time difference measured by HDC.

In the second scan (with reference to Fig. 7(B)), it is assumed that the time-to-digital converter TDC of the receiver circuit is enabled after the delay of 2.2 ns from the rising edge of the reference signal kick due to the metastability, that is, there is the deviation of 1 ns of the enable time point of TDC in the second scan from the enable time point of TDC in the first scan due to the metastability, that is, the initial start time point $\widetilde{t}_0$ including the unpredictable jitter delay is 2.2 ns. HDC is enabled with the delay of 2 ns relative to TDC. The initial timing time point measured by TDC is $t_1$ = 2 ns, the reference time point is $t_2$ = 7.8 ns, and the compensation delay is $\Delta t = t_2 - t_1$ = 5.8 ns. The system comprehensive delay updated in the previous scan is taken as the system comprehensive delay $\delta t$ = 0.2 ns in the current scan. Round to the nearest integer to calculate the second delay as x = round ($\Delta t$ + $T_1$+$\delta t$) = round (5.8 + 5 + 0.2) = 11 ns, and then the system comprehensive delay is updated as $\delta t$ = 11 - 5.8 - 5 = 0.2 ns and the determined calculation start point of TDC is t_TDC_origin = $t_1$ + x = 2 + 11 = 13 ns. The enable time point of TDC is delayed by 2.2 ns relative to the rising edge time point of the reference signal kick, that is, the initial start time point $\widetilde{t}_0$ is 2.2 ns, and thus the return time point $t_4$ measured by TDC is 19.8 ns, that is, $T_2$ = 19.8 ns. The measurement result of the return time point is recalculated with the calculation start point of TDC to determine the first time difference in the second scan as t = $t_4$ - t_TDC_origin = 19.8 - 13 = 6.8 ns, and the first time difference is the measured value by TDC on the echo signal in the second scan. By calibrating the first time difference recalculated based on the start point calculation of TDC using the previously determined time calibration value t_TDC_c of TDC, the target time difference measured by TDC can be determined as TOF = t_TDC_c + t = 15.2 + 6.8 = 22 ns. It can be known that the target time difference TOF determined in the second scan is consistent with the value of the target time difference TOF determined in the first scan, and is not influenced by the jitter of the enable time point of TDC, that is, it illustrates that the calculation start point of TDC determined based on the technical solutions of this disclosure is stable.

For the histogram sampler HDC, its enable time point $t_1$ is delayed by 4.2 ns relative to the reference signal kick. Accordingly, the return time point $t_5$ measured by the histogram sampler HDC is 17.8 ns. The calculation start point of HDC determined based on the technical solutions of this disclosure is t_HDC_origin = x = 11 ns, and the echo signal measured by HDC is recalculated based on the determined calculation start point of HDC, that is, the time difference between the calculation start point $t_HDC_origin$ of HDC and the return time point $t_5$ is calculated as the second time difference, which is t' = $t_5$ -

t_HDC_origin = 18.8 - 11 = 6.8 ns, and the second time difference is the measured value by HDC on the echo signal in the second scan. By calibrating the second time difference determined by recalculating based on the calculation start point of HDC using the previously determined time calibration value t_HDC_c of HDC, the target time difference measured by HDC can be determined as TOF = t' + t_HDC_c = 6.8 + 15.2 = 22 ns. It is known that the value of the target time difference TOF determined by HDC in the second scan is consistent with the value of the target time difference TOF determined in the first scan, and is not influenced by the jitter of the enable time point of HDC, that is, it illustrates that the calculation start point of HDC determined based on the technical solutions of this disclosure is stable. It can be intuitively seen based on Fig. 5 that the calculation start point of TDC and the calculation start point of HDC are aligned in time.

It can be seen that although the enable time point of the time-to-digital converter TDC has the jitter of several ns due to the metastability of the trigger signal, the calculation start point determined by the method of this disclosure is stable during the multiple measurements, and the return time point determined with the stable calculation start point is also a stable value and is not influenced by the jitter caused by the metastability. It can be seen that the method of this disclosure eliminates the problem of the jitter when measuring a start point in a case of the asynchronous clock of the receiver circuit, which can ensure the stability of the measurement results of the return time point in the multiple scans, thereby improving the measurement accuracy. The calculation start point of TDC and the calculation start point of HDC determined by the technical solutions of this disclosure are aligned in time, so that the measurement results of TDC and HDC on the target time difference are consistent, which also facilitates the subsequent fusion processing of the measurement results of TDC and HDC.

Based on a same principle, other embodiments in Figs. 5 and 6 can also eliminate the same problem of the jitter of the start point. For example, with reference to Fig. 6B, the trigger signal trigger and the reference signal kick are two different signals. The transmitter circuit provides the trigger signal trigger before the reference signal kick. The delay between the trigger signal trigger and the reference signal kick is fixed, to cause TDC and HDC of the receiver circuit to be triggered before the arrival of the reference signal kick, and the reference time point $t_2$ can be determined by measuring the falling edge of the reference signal kick. Fig. 6C shows a case where the trigger signal trigger and the reference signal kick are two different signals. The transmitter circuit provides the trigger signal trigger before the reference signal kick, to cause TDC and HDC to be triggered before the arrival of the reference signal kick. The receiver circuit can determine the reference time point $t_2$ by measuring the rising edge of the time reference signal kick. Similarly, Figs. 5B and 5C show cases where the trigger signal trigger and the reference signal kick are two different signals. The transmitter circuit provides the trigger signal trigger before the reference signal kick, to cause TDC and HDC to be enabled successively, and then the receiver circuit can measure the rising edge time point and the falling edge time point of the reference signal kick, respectively. The receiver circuit can determine the reference time point $t_2$.

Specific embodiments of this specification have been described above. Other embodiments are within the scope of appended claims. In some cases, actions or steps recorded in the claims can be performed in a different order than that in the embodiments and still achieve a desired result. In addition, it is not beneficial for processes depicted in drawings to be shown in a specific order or a continuous order to achieve the desired result. In some embodiments, multitasking processing and parallel processing are also possible or can be beneficial.

In summary, once reading this detailed disclosure, it can be understood by those skilled in the art that the foregoing detailed disclosure can be presented merely as an example, and can not be limiting. Although it is not explicitly stated herein, it can be understood by those skilled in the art that needs of this specification encompass various reasonable changes, improvements, and modifications to the embodiments. These changes, improvements, and modifications are intended to be proposed by this specification and are within the spirit and scope of the exemple embodiments of this specification.

In addition, some terms in this specification have been used to describe the embodiments of this specification. For example, at least one of "one embodiment," "an embodiment" or "some embodiments" means that specific features, structures or characteristics described combined with this embodiment can be included in at least one of the embodiments of this specification. Accordingly, it can be emphasized and understood that references to two or more of "an embodiment" or "one embodiment" or "an alternative embodiment" in various parts of this specification do not necessarily all refer to the same embodiment. In addition, the specific features, structures or characteristics can be appropriately combined in one or more of the embodiments of this specification.

It should be understood that in the foregoing description of the embodiments of this specification, to help understand one feature, this specification combines various features in a single embodiment, figure or description thereof for a purpose of simplifying this specification. However, this does not mean that combination of these features is beneficial, and it is entirely possible for those skilled in the art to mark some of devices as separate embodiments for understanding when reading this specification. That is to say, the embodiments of this specification can also be understood as integration of multiple sub-embodiments. And content of each sub-embodiment is also true when it is less than all features of a single previously disclosed embodiment.

Each patent, patent application, publication of patent application, and other materials cited in this disclosure, such as papers, books, specification, publications, documents, and articles, can be incorporated herein by reference. All content used for all purposes, except any history of prosecution documents related thereto, any identical history of prosecution documents that can be inconsistent or conflict with this disclosure, or any identical history of prosecution documents that can have a limited influence on a broadest scope of the claims, is associated with this disclosure currently or in the future. For example, if there is any inconsistency or conflict between at least one of description, definition or use of terms associated with any contained material and at least one of terms, description, definition or use related to this disclosure, the terms in this disclosure shall prevail.

Finally, it should be understood that the embodiments of this disclosure disclosed herein are illustrative of principles of the embodiments of this specification. Other modified embodiments are also within the scope of this specification. Accordingly, the embodiments disclosed in this specification are merely as examples rather than limitations. Alternative configurations can be used by those skilled in the art based on the embodiments of this specification to realize this disclosure in this specification. Accordingly, the embodiments of this specification are not limited to those accurately described in this disclosure.

**Claims**

1. A signal transmitting and receiving system, comprising:

   a transmitter circuit configured to generate a trigger signal at a trigger time point based on a first clock signal and transmit a detection signal at a transmitting time point; and
   a receiver circuit configured to receive an echo signal generated by reflection of the detection signal by a target object, and receive the trigger signal based on a second clock signal and enable a first receiving channel at an initial start time point, wherein the first receiving channel takes the initial start time point as a time origin, and senses a return time point of receiving the echo signal:

      determining a first calculation start point of the first receiving channel, and
      determining a target time difference between the return time point sensed by the first receiving channel and the transmitting time point based on the first calculation start point,
      wherein a first delay of the initial start time point relative to the trigger time point comprises an unpredictable jitter delay.

2. The signal transmitting and receiving system based on claim 1, wherein determining the target time difference comprises:

determining a first time difference between the first calculation start point and the return time point; and
determining the target time difference by summing the first time difference with a pre-calibrated time calibration value.

3. The signal transmitting and receiving system based on claim 1, wherein the transmitter circuit further generates a reference signal, and the reference signal has a fixed time sequence relationship with the transmitting time point; and determining the first calculation start point further comprises:

determining, by the first receiving channel, a reference time point based on the reference signal, and
determining the first calculation start point based on the reference time point.

4. The signal transmitting and receiving system based on claim 3, wherein determining the first calculation start point based on the reference time point comprises determining an expected scanning delay, wherein the expected scanning delay is a delay of a preset duration after the reference time point; and the first receiving channel taking the initial start time point as the time origin:

determining an initial timing time point;
determining a compensation delay based on the initial timing time point and the reference time point, wherein the compensation delay comprises a canceling part for the jitter delay; and
determining the first calculation start point based on the initial timing time point and the compensation delay.

5. The signal transmitting and receiving system based on claim 4, wherein determining the initial timing time point comprises:
determining the initial timing time point based on the initial start time point.

6. The signal transmitting and receiving system based on claim 4, wherein the receiver circuit further comprises a second receiving channel, and the second receiving channel is enabled at a first start time point and configured to sense the echo signal; and determining the initial timing time point comprises:

determining the initial timing time point based on the first start time point.

7. The signal transmitting and receiving system based on claim 6, wherein determining the first calculation start point based on the initial timing time point and the compensation delay comprises determining a system comprehensive delay, and determining a second delay based on the compensation delay, the expected scanning delay, and the system comprehensive delay; and determining the first calculation start point based on the initial timing time point and the second delay.

8. The signal transmitting and receiving system based on claim 6 or 7, wherein the receiver circuit further determines a second calculation start point of the second receiving channel based on the second delay, and determines target time difference between a return time point of the echo signal sensed by the second receiving channel and the transmitting time point based on the second calculation start point.

9. The signal transmitting and receiving system based on claim 4, wherein the receiver circuit further comprises a second receiving channel, and the second receiving channel enables a pre-enable signal at the first start time point and enables an enable signal at the second start time point, wherein the enable signal of the second receiving channel is configured to sense the echo signal; and determining the initial timing time point comprises: determining the initial timing time point based on the first start time point.

10. The signal transmitting and receiving system based on claim 9, wherein determining the first calculation start point based on the initial timing time point and the compensation delay comprises determining the system comprehensive delay, determining the second delay based on the compensation delay, the expected scanning delay, and the system comprehensive delay, and determining the first calculation start point based on the initial timing time point and the second delay.

11. The signal transmitting and receiving system based on claim 9 or 10, wherein the receiver circuit further determines the second calculation start point of the enable signal of the second receiving channel based on the first start time point and the second delay, and determines the target time difference between the return time point of the echo signal sensed by the enable signal and the transmitting time point based on the second calculation start point.

12. The signal transmitting and receiving system based on claim 7 or 10, wherein determining the system comprehensive delay comprises: selecting a value of the system comprehensive delay of a previous scan as a value of the system comprehensive delay of a current scan; and
determining the first calculation start point comprises:

determining an initial second delay by summing the compensation delay, the expected scanning delay, and the system comprehensive delay of the current scan;
determining an integer time unit value by rounding a value of the initial second delay;
determining the integer time unit value as a value of the second delay of the current scan;
updating the system comprehensive delay of the current scan based on the value of the second delay of the current scan; and
determining the first calculation start point by summing the initial timing time point and the second delay at a current time point.

13. The signal transmitting and receiving system based on any of claims 1 to 3, wherein

the trigger signal is the reference signal; and
the trigger time point is a rising edge time point of the reference signal, and
the reference time point is a falling edge time point of the reference signal.

14. The signal transmitting and receiving system based on any of claims 1 to 3, wherein

the trigger signal is different from the reference signal, and has the fixed time sequence relationship with the reference signal; and
the trigger time point is earlier than the rising edge time point of the reference signal, and
the reference time point is the rising edge time point or the falling edge time point of the reference signal.

15. A signal transmitting and receiving method, comprising:

generating a trigger signal at a trigger time point based on a first clock signal by a transmitter circuit and transmitting a detection signal at a transmitting time point; and
receiving an echo signal generated by reflection of the detection signal by a target object by a receiver circuit, and receiving the trigger signal based on a second clock signal and enabling a first receiving channel at an initial start time point, wherein the first receiving channel takes the initial start time point as a time origin and senses a return time point of receiving the echo signal:

determining a first calculation start point of the first receiving channel, and
determining a target time difference between the return time point sensed by the first receiving channel and the transmitting time point based on the first calculation start point,
wherein a first delay between the initial start time point and the trigger time point comprises an unpredictable jitter delay.

16. The signal transmitting and receiving method based on claim 15, wherein determining the target time difference between the return time point sensed by the first receiving channel and the transmitting time point based on the first calculation start point comprises:

determining a first time difference between the first calculation start point and the return time point; and
determining the target time difference by summing the first time difference with a pre-calibrated time calibration value

17. The signal transmitting and receiving method based on claim 15, wherein the transmitter circuit further generates a reference signal, and the reference signal has a fixed time sequence relationship with the transmitting time point; and
determining the first calculation start point further comprises:

determining, by the first receiving channel, a reference time point based on the reference signal, and
determining the first calculation start point based on the reference time point.

18. The signal transmitting and receiving method based on claim 17, wherein determining the first calculation start point based on the reference time point comprises determining an expected scanning delay, wherein the expected scanning delay is a delay of a preset duration after the reference time point; and
the first receiving channel taking the initial start time point as the time origin:

determining an initial timing time point;
determining a compensation delay based on the initial timing time point and the reference time point, wherein the compensation delay comprises a canceling part for the jitter delay; and
determining the first calculation start point based on the initial timing time point and the compensation delay.

**19.** The signal transmitting and receiving method based on claim 18, wherein determining the initial timing time point comprises:
determining the initial timing time point based on the initial start time point.

**20.** The signal transmitting and receiving method based on claim 18, wherein the receiver circuit further comprises a second receiving channel, and the second receiving channel is enabled at a first start time point and configured to sense the echo signal; and
the determining the initial timing time point comprises:
determining the initial timing time point based on the first start time point.

**21.** The signal transmitting and receiving method based on claim 20, wherein determining the first calculation start point based on the initial timing time point and the compensation delay comprises determining a system comprehensive delay, determining a second delay based on the compensation delay, the expected scanning delay, and the system comprehensive delay; and determining the first calculation start point based on the initial timing time point and the second delay.

**22.** The signal transmitting and receiving method based on claim 20 or 21, wherein the receiver circuit further determines a second calculation start point of the second receiving channel based on the first start time point and the second delay, and determines the target time difference between a return time point of the echo signal sensed by the second receiving channel and the transmitting time point based on the second calculation start point.

**23.** The signal transmitting and receiving method based on claim 18, wherein the receiver circuit further comprises a second receiving channel, and the second receiving channel enables a pre-enable signal at the first start time point and enables an enable signal at the second start time point, wherein the enable signal of the second receiving channel is configured to sense the echo signal; and
determining the initial timing time point comprises:
determining the initial timing time point based on the first start time point.

**24.** The signal transmitting and receiving method based on claim 23, wherein determining the first calculation start point based on the initial timing time point and the compensation delay comprises determining the system comprehensive delay, determining the second delay based on the compensation delay, the expected scanning delay, and the system comprehensive delay, and determining the first calculation start point based on the initial timing time point and the second delay.

**25.** The signal transmitting and receiving method based on claim 23 or 24, wherein the receiver circuit further determines the second calculation start point of the enable signal of the second receiving channel based on the first start time point and the second delay, and determines the target time difference between the return time point of the echo signal sensed by the enable signal and the transmitting time point based on the second calculation start point.

**26.** The signal transmitting and receiving method based on claim 21 or 24, wherein determining the system comprehensive delay comprises: selecting a value of the system comprehensive delay of a previous scan as a value of the system comprehensive delay of a current scan; and determining the first calculation start point comprises:

determining an initial second delay by summing the compensation delay, the expected scanning delay, and the system comprehensive delay of the current scan;
determining an integer time unit value by rounding a value of the initial second delay;
determining the integer time unit value as a value of the second delay of the current scan;
updating the system comprehensive delay of the current scan based on the value of the second delay of the current scan; and
determining the first calculation start point by summing the initial timing time point and the second delay at a current time point.

**27.** The signal transmitting and receiving method based on any of claims 15 to 17, wherein

the trigger signal is the reference signal; and
the trigger time point is a rising edge time point of the reference signal, and
the reference time point is a falling edge time point of the reference signal.

**28.** The signal transmitting and receiving method based on any of claims 15 to 17, wherein

the trigger signal is different from the reference signal, and has the fixed time sequence relationship with the reference signal; and
the trigger time point is earlier than the rising edge time point of the reference signal, and
the reference time point is the rising edge time point or the falling edge time point of the reference signal.

kick

$T_{su}$ $T_h$

0  1  2  3  4

kick'

with value of 1
under metastability

kick"

Fig. 1A

kick

$T_{su}$ $T_h$

0  1  2  3  4

with value of 0
under metastability

kick'

kick"

Fig. 1B

100

detection signal

echo signal

target object

Fig. 2

300

S310: transmitter circuit generate trigger signal at trigger time point based on first clock signal and transmit detection signal at transmitting time point

S320: receiver circuit receive trigger signal based on second clock signal and enable first receiving channel at initial start time point

S330: first receiving channel sense return time point of receiving echo signal with initial start time point as time origin; and receiver circuit determine first calculation start point of first receiving channel

S340: receiver circuit determine target time difference between return time point sensed by first receiving channel and transmitting time point based on first calculation start point

Fig. 3

Fig. 4

Fig. 5A

Fig. 5B

Fig. 5C

Fig. 6A

Fig. 6B

trigger

*t_trigger*

kick $t_2$ $T_1$

TDC_en $\xi$ $\Delta t$ *t_TDC_origin*

HDC_en_pre $t_1$ $x$

*t_HDC_origin*

HDC_en

Fig. 6C

Fig. 7

Fig. 8

detection signal　　echo signal

TOF=22ns

kick　　$T_0$=10ns

(A)

TDC_en　　1.2ns　　20.8ns

HDC_en　　2ns　　18.8ns

(B)

TDC_en　　2.2ns　　19.8ns

HDC_en　　2ns　　17.8ns

Fig. 9

# EP 4 521 140 A1

| INTERNATIONAL SEARCH REPORT | International application No. |
|---|---|
| | **PCT/CN2022/115643** |

**A. CLASSIFICATION OF SUBJECT MATTER**

G01S 7/4861(2020.01)i

According to International Patent Classification (IPC) or to both national classification and IPC

**B. FIELDS SEARCHED**

Minimum documentation searched (classification system followed by classification symbols)

G01S; G01C

Documentation searched other than minimum documentation to the extent that such documents are included in the fields searched

Electronic data base consulted during the international search (name of data base and, where practicable, search terms used)

CNKI, CNPAT, EPODOC, WPI: 时间差, 抖动时延, 激光, 探测, 回波, 时差, 雷达, 发射, 返回, 反射, 接收, 亚稳态, detection, ranging, LIDAR, transmit, receive, time, measurement, return pulse, time of flight, hit signal, measurement pulse, return light

**C. DOCUMENTS CONSIDERED TO BE RELEVANT**

| Category* | Citation of document, with indication, where appropriate, of the relevant passages | Relevant to claim No. |
|---|---|---|
| A | CN 110809704 A (VELODYNE LIDAR INC.) 18 February 2020 (2020-02-18) description, paragraphs 15-16 and 36-53, and figures 1-2 | 1-28 |
| A | CN 113534173 A (SHANGHAI HESAI TECHNOLOGY CO., LTD.) 22 October 2021 (2021-10-22) entire document | 1-28 |
| A | CN 114280573 A (SHANGHAI HESAI TECHNOLOGY CO., LTD.) 05 April 2022 (2022-04-05) entire document | 1-28 |
| A | US 2018299249 A1 (LEICA GEOSYSTEMS AG.) 18 October 2018 (2018-10-18) entire document | 1-28 |

☐ Further documents are listed in the continuation of Box C.　☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| **05 November 2022** | **28 November 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**Information on patent family members**

International application No.

**PCT/CN2022/115643**

| Patent document cited in search report | | | Publication date (day/month/year) | Patent family member(s) | | | Publication date (day/month/year) |
|---|---|---|---|---|---|---|---|
| CN | 110809704 | A | 18 February 2020 | JP | 2020519881 | A | 02 July 2020 |
| | | | | EP | 3612798 | A1 | 26 February 2020 |
| | | | | WO | 2018208843 | A1 | 15 November 2018 |
| | | | | US | 2018321360 | A1 | 08 November 2018 |
| | | | | CA | 3062701 | A1 | 15 November 2018 |
| | | | | US | 2020166613 | A1 | 28 May 2020 |
| | | | | IN | 201927050170 | A | 02 October 2020 |
| | | | | HK | 40018010 | A0 | 25 September 2020 |
| CN | 113534173 | A | 22 October 2021 | None | | | |
| CN | 114280573 | A | 05 April 2022 | None | | | |
| US | 2018299249 | A1 | 18 October 2018 | EP | 3388862 | A1 | 17 October 2018 |
| | | | | CN | 108732579 | A | 02 November 2018 |

Form PCT/ISA/210 (patent family annex) (January 2015)